# EUROPÄISCHE PATENTSCHRIFT

(11) **EP 2 807 382 B1**
(45) Veröffentlichungstag und Bekanntmachung des Hinweises auf die Patenterteilung: **18.10.2017**
(21) Anmeldenummer: 13701971.7
(22) Anmeldetag: 23.01.2013
(51) Int. Cl.: F16B 19/02, B29C 65/00, F16B 19/08, F16B 37/06, B29C 65/44

(54) **BEFESTIGUNGSELEMENT UND VERFAHREN ZU DESSEN MONTAGE**
FASTENING ELEMENT AND METHOD FOR MOUNTING SAME
ÉLÉMENT DE FIXATION ET PROCÉDÉ DE MONTAGE DUDIT ÉLÉMENT

(30) Priorität: 25.01.2012 DE 102012201041; 16.03.2012 DE 102012204187
(43) Veröffentlichungstag der Anmeldung: 03.12.2014
(73) Patentinhaber: Adient Luxembourg Holding S.à r.l., 2453 Luxembourg (LU)
(72) Erfinder: FLOCK, Dustin, 51069 Köln (DE)
(74) Vertreter: Finger, Catrin
(86) Internationale Anmeldenummer: PCT/EP2013/051184
(87) Internationale Veröffentlichungsnummer: WO 2013/110630

(56) Entgegenhaltungen:
- EP-A2- 1 099 866
- WO-A1-03/001075
- DE-A1- 1 704 771
- DE-A1-102009 056 580
- DE-U1-202009 007 585
- FR-A1- 2 582 756
- GB-A- 618 033
- GB-A- 1 221 507
- US-A- 3 919 916

## Beschreibung

Die Erfindung betrifft ein Befestigungselement zur form-, stoff- und/oder kraftschlüssigen Anordnung an oder in einem Faserverbundbauteil gemäß dem Oberbegriff des Anspruchs 1. Weiterhin betrifft die Erfindung ein Verfahren zur Montage eines Befestigungselements gemäß dem Oberbegriff des Anspruchs 6. Im Stand der Technik werden Anbindungselemente an Faserverbundbauteile mittels Verschraubung, Vernietung und/oder Verklebung angebracht. Solche Faserverbundbauteile sind beispielsweise faserverstärkte Thermoplastplatten.

In der EP 1 158 186 A1 wird ein als Hohlniet ausgebildetes Befestigungselement beschrieben, welches ein Innengewinde und einen vieleckigen Querschnitt aufweist. Das Befestigungselement weist einen hülsenartigen Abschnitt auf, an dessen einem Ende ein Halteabschnitt angeordnet ist, welcher vom hülsenartigen Abschnitt abgewinkelt ist und somit einen Außendurchmesser des hülsenartigen Abschnitts vergrößert und plane Anlageflächen ausbildet.

Aus der DE 1 781 630 U ist ein Niet bekannt, welcher aus zwei Teilen besteht. Der erste Teil ist aus einem Hohlzylinder mit einem Kopfende und einem umzubördelnden Ende gebildet. Der zweite Teil besteht aus einem zylindrischen Stab, dessen Außendurchmesser dem Innendruchmesser des Nietes entspricht. Der Stab hat an einem Ende eine konische Erweiterung, deren größter Durchmesser dem Außendurchmesser des Nietes entspricht.

In der US 3,515,419 A wird ein zweiteiliges Befestigungselement beschrieben, welches einen Bolzen und eine in einem Werkstück anzuordnende Hülse umfasst. Der Bolzen wird in der Hülse kraftschlüssig gehalten.

In der GB 1 221 507 A ist ein Befestigungselement offenbart, das an einem Ende eines hülsenartigen Abschnitts eine Spitze aufweist. Das Befestigungselement wird mittels eines in dem Befestigungselement ansetzenden Werkzeugs mit der Spitze voran durch die zu verbindenden Werkstücke gedrückt. Nach dem Durchdringen der Werkstücke reißt die Spitze ab. Eine Verbindung wird durch nach außen gebogene Bereiche des hülsenartigen Abschnitts bewirkt.

Aus der US 3,919,916 A ist ein Befestigungselement bekannt, das einen hülsenartigen Abschnitt und eine mit Längsschlitzen versehene Spitze aufweist. Zwischen dem hülsenartigen Abschnitt und der Spitze ist ein geschlitzter, ansonsten aber aus einem Vollmaterial gebildeter massiver Abschnitt vorhanden, an dem ein Druckstift angesetzt ist. Auf einen Umfang des massiv ausgebildeten Abschnitts ist eine Lochscheibe aufgeschoben. Während der Montage des Befestigungselements wird über den Druckstift eine Kraft in das Befestigungselement geleitet und die Spitze durch zu verbindende Werkstücke getrieben. Dabei dient die Lochscheibe als Widerlager gegenüber radial wirkenden Kräften des Druckstifts. Während des Durchdringens der Werkstücke wird die Lochscheibe axial verschoben, sodass die Spitze nach dem Durchdringen der Werkstücke durch den Druckstift auseinander getrieben wird und eine Befestigung der Werkstücke durch das Befestigungselement bewirkt wird.

Aufgabe der vorliegenden Erfindung ist es, ein verbessertes Befestigungselement zur form-, stoff- und/oder kraftschlüssigen Anordnung an einem Faserverbundbauteil und ein verbessertes Verfahren zu dessen Montage anzugeben.

Hinsichtlich des Befestigungselements zur form-, stoff- und/oder kraftschlüssigen Anordnung an oder in einem Faserverbundbauteil wird die Aufgabe durch die im Anspruch 1 angegebenen Merkmale gelöst. Hinsichtlich des Verfahrens zur Montage eines Befestigungselements wird die Aufgabe durch die im Anspruch 6 angegebenen Merkmale gelöst.

Vorteilhafte Weiterbildungen der Erfindung sind Gegenstand der Unteransprüche.

Das Befestigungselement zur form-, stoff- und/oder kraftschlüssigen Anordnung an oder in einem Faserverbundbauteil umfasst erfindungsgemäß einen hülsenartigen Abschnitt, an dessen erstem Ende ein spitz zulaufender konus- oder kegelförmiger Abschnitt ausgebildet ist, in welchem eine Mehrzahl von Schlitzen eingebracht ist, welche in Richtung einer Längserstreckung des Befestigungselements ausgerichtet sind und den konus- oder kegelförmigen Abschnitt derart in einzelne Segmente unterteilen und an dessen zweitem Ende ein Halteabschnitt angeordnet ist, welcher rechtwinklig vom hülsenartigen Abschnitt abgewinkelt ist und derart einen Außendurchmesser des hülsenartigen Abschnitts vergrößert und plane Anlageflächen ausbildet.

Mittels eines erfindungsgemäßen Befestigungselements können hohe Kräfte übertragen werden, welche beispielsweise an Autositzen im Crashfall auftreten. Herkömmliche Verbindungselemente müssen entweder aufwändig im Herstellprozess des Faserverbundbauteils in selbigem eingebettet werden oder schraubend unter Zerstörung der Fasern des Faserverbundbauteils durch einen Bohrungsprozess am Faserverbundbauteil angeordnet werden.

Mittels eines erfindungsgemäßen Befestigungselements ist ein faserzerstörungsfreier form-, stoff- und/oder kraftschlüssiger Verbund zwischen Befestigungselement und Faserverbundbauteil ermöglicht, wobei insbesondere eine Kraftleitung zwischen Befestigungselement und Faserverbundbauteil signifikant verbessert ist.

In einem Übergangsbereich zwischen dem hülsenartigen Abschnitt und dem konus- oder kegelförmigen Abschnitt ist eine Materialschwächung ausgebildet, welche besonders bevorzugt als eine Perforation und/oder eine Querschnittsverringerung ausgebildet ist. Dadurch ist vorteilhafterweise eine Abwinklung der einzelnen Segmente des konus- oder kegelförmigen Abschnitts unterstützt.

In einer besonders vorteilhaften Ausführungsvariante ist am oder im hülsenartigen Abschnitt ein Innengewinde ausgebildet, so dass eine herkömmliche Schraube als Befestigungsmittel direkt im Befestigungselement anordbar ist.

In einer weiteren vorteilhaften Ausführungsvariante ist im Bereich des hülsenartigen Abschnitts außenseitig eine Oberflächenstrukturierung ausgebildet, welche besonders bevorzugt als eine Narbung und/oder eine Riffelung ausgebildet ist. Eine solche Oberflächenstrukturierung ermöglicht eine besonders halt- und belastbare Verbindung zwischen der aufgeschmolzenen thermoplastischen Matrix des Faserverbundbauteils und dem hülsenartigen Abschnitt des erfindungsgemäßen Befestigungselements.

Beim Verfahren zur Montage eines Befestigungselements wird das Befestigungselement erfindungsgemäß auf eine vorgebbare Temperatur, welche oberhalb einer Schmelztemperatur der thermoplastischen Matrix des Faserverbundbauteils liegt, erhitzt und in erhitztem Zustand derart durch ein Faserverbundbauteil gedrückt oder gepresst, dass eine Anlagefläche eines Halteabschnitts des Befestigungselements an einer Seite des Faserverbundbauteils plan anliegt und ein konus- oder kegelförmiger Abschnitt des Befestigungselements das Faserverbundbauteil auf der anderen Seite überragt. Dabei wird die thermoplastische Matrix im Verlauf des Durchdrückens des heißen Befestigungselements aufgeschmolzen und bildet beim Erkalten eine form-, stoff- und/oder kraftschlüssige Verbindung mit dem Befestigungselement aus.

Dadurch ist zwischen Befestigungselement und Faserverbundbauteil eine besonders robuste und widerstandsfähige form-, stoff- und/oder kraftschlüssige Verbindung ausgebildet, mittels der große Kräfte in das Faserverbundbauteil einleitbar sind.

Im Verlauf des Durchdrückens des heißen Befestigungselements durch das Faserverbundbauteil werden die Fasern des Faserverbundbauteils durch den konus- oder kegelförmiger Abschnitt des Befestigungselements derart zerstörungsfrei verdrängt, dass sie sich um den hülsenartigen Abschnitt des Befestigungselements legen und derart eine neue Faserorientierung ausgebildet wird. Dabei ermöglicht diese neue Faserorientierung einen besonders vorteilhaften Kraftfluss und eine verbesserte Krafteinleitung vom Befestigungselement in das Faserverbundbauteil.

In einer ersten Ausführungsvariante wird eine Schraube in den hülsenförmigen Abschnitt eingeführt, deren Schaft einzelne Segmente des konus- oder kegelförmigen Abschnitts auseinanderdrückt, welche beim anschließenden Anordnen des zu befestigenden Bauelements und einem Aufschrauben einer Mutter auf den Schaft der Schraube derart verformt werden bis sie rechtwinklig vom hülsenartigen Abschnitt abgewinkelt sind und derart einen Außendurchmesser des hülsenartigen Abschnitts vergrößern und plane Anlageflächen ausbilden. Dabei können die einzelnen Segmente des konus- oder kegelförmigen Abschnitts im abgewinkelten Zustand vorteilhafterweise eine herkömmliche Unterlegscheibe substituieren.

In einer alternativen Ausführungsvariante werden die einzelnen Segmente des konus- oder kegelförmigen Abschnitts mittels eines Dorns abgewinkelt, wobei am oder im hülsenartigen Abschnitt des Befestigungselements ein Innengewinde ausgebildet ist, in welches eine herkömmliche Schraube eingeschraubt wird, deren Schraubenkopf das zu befestigende Bauelement plan an eine von den einzelnen Segmenten des konus- oder kegelförmigen Abschnitts gebildete Anlagefläche presst.

Mittels einer solchen Verbindung können hohe Kräfte übertragen werden, welche beispielsweise an Autositzen im Crashfall auftreten. Herkömmliche Verbindungselemente müssen entweder aufwändig im Herstellprozess des Faserverbundbauteils in selbigem eingebettet werden oder schraubend unter Zerstörung der Fasern des Faserverbundbauteils durch einen Bohrungsprozess am Faserverbundbauteil angeordnet werden. Das erfindungsgemäße Verfahren ermöglicht einen faserzerstörungsfreien form-, stoff- und/oder kraftschlüssigen Verbund zwischen Befestigungselement und Faserverbundbauteil, wobei insbesondere eine Kraftleitung zwischen Befestigungselement und Faserverbundbauteil signifikant verbessert ist.

Ausführungsbeispiele der Erfindung werden im Folgenden anhand von Zeichnungen näher erläutert.

Dabei zeigen:
- Fig. 1: schematisch eine Draufsicht auf ein erfindungsgemäßes Befestigungselement,
- Fig. 2: schematisch eine Schnittdarstellung eines erfindungsgemäßen Befestigungselements,
- Fig. 3: schematisch eine Draufsicht auf ein erfindungsgemäßes in einem Faserverbundbauteil angeordnetes Befestigungselement und einen Faserverlauf von Fasern des Faserverbundbauteils,
- Fig. 4: schematisch eine Schnittdarstellung einer mittels eines erfindungsgemäßen Befestigungselements hergestellten Verbindung zwischen einem Faserverbundbauteil und einem Bauelement in einer ersten Ausführungsvariante und
- Fig. 5: schematisch eine Schnittdarstellung einer mittels eines erfindungsgemäßen Befestigungselements hergestellten Verbindung zwischen einem Faserverbundbauteil und einem Bauelement in einer zweiten Ausführungsvariante.

Einander entsprechende Teile sind in allen Zeichnungen mit den gleichen Bezugszeichen versehen.

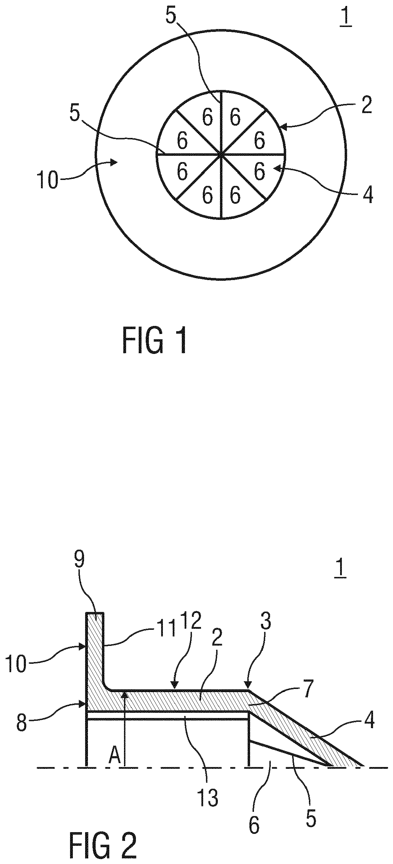

In Figur 1 ist schematisch eine Draufsicht auf ein erfindungsgemäßes Befestigungselement 1 dargestellt.

Figur 2 zeigt schematisch eine Schnittdarstellung eines erfindungsgemäßen Befestigungselements 1 in einem unmontierten Zustand.

Das erfindungsgemäße Befestigungselement 1 weist in seinem zentralen Bereich einen hülsenartigen Abschnitt 2 auf.

An einem ersten Ende 3 des hülsenartigen Abschnitts 2 ist ein spitz zulaufender konus- oder kegelförmiger Abschnitt 4 ausgebildet. In diesem konus- oder kegelförmigen Abschnitt 4 ist eine Mehrzahl von Schlitzen 5 eingebracht, welche in Richtung einer Längserstreckung des Befestigungselements 1 ausgerichtet sind und den konus- oder kegelförmigen Abschnitt 4 derart in einzelne Segmente 6 unterteilen. Die Segmente 6 weisen bevorzugt eine dreieckige Ausformung auf.

In der erfindungsgemäßen, nicht dargestellten Ausführungsvariante ist in einem Übergangsbereich 7 zwischen dem hülsenartigen Abschnitt 2 und dem konus- oder kegelförmigen Abschnitt 4 eine Materialschwächung, beispielsweise eine Perforation oder eine Querschnittsverringerung, ausgebildet. An einem zweiten Ende 8 des hülsenartigen Abschnitts 2 ist ein Halteabschnitt 9 angeordnet, welcher rechtwinklig vom hülsenartigen Abschnitt 2 abgewinkelt ist und derart einen Außendurchmesser A des hülsenartigen Abschnitts 2 vergrößert und plane Anlageflächen 10, 11 ausbildet.

Dabei ist eine erste Anlagefläche 10 vom hülsenartigen Abschnitt 2 abgewandt, während die zweite Anlagefläche 11 in Richtung des hülsenartigen Abschnitts 2 weist.

Der Halteabschnitt 9 ist bevorzugt rund ausgebildet und kann in alternativen Ausführungsvarianten vieleckig oder oval ausgebildet sein.

Das Befestigungselement 1 ist bevorzugt aus einem metallischen Werkstoff gebildet und kann im Bereich des hülsenartigen Abschnitts 2 außenseitig eine Oberflächenstrukturierung 12 aufweisen. Eine solche Oberflächenstrukturierung 12 kann beispielweise durch eine Narbung oder Riffelung gebildet werden.

In einer besonders vorteilhaften Ausführungsvariante ist am oder im hülsenartigen Abschnitt 2 ein herkömmliches Innengewinde 13 ausgebildet.

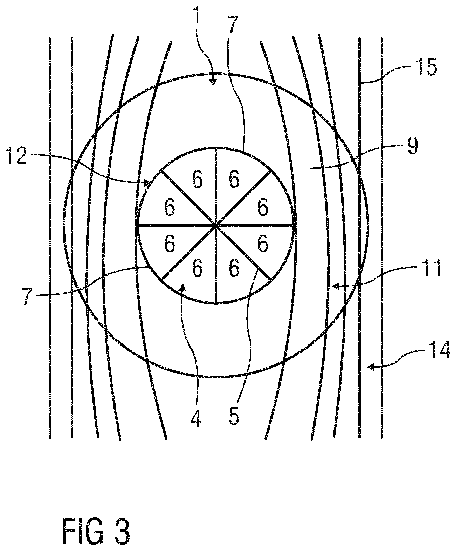

Figur 3 zeigt schematisch eine Draufsicht auf ein erfindungsgemäßes in einem Faserverbundbauteil 14 angeordnetes Befestigungselement 1 und einen Faserverlauf von Fasern 15 des Faserverbundbauteils 14.

Das Befestigungselement 1 wird mittels des erfindungsgemäßen Verfahrens in einem Faserverbundbauteil 14 angeordnet. Das Faserverbundbauteil 14 ist bevorzugt ein flächiges Halbzeug aus einem thermoplastischen Kunststoff, in welchem ein Gewebe aus Glas-, Carbon- und/oder Aramidfasern oder einer Mischform aus diesen derart eingebracht ist, dass die Fasern 15 vollständig mit thermoplastischem Kunststoff benetzt sind.

Ein solches Faserverbundbauteil 14 kann beispielsweise eine Sitzstruktur eines Fahrzeugsitzes, insbesondere eine Sitzlehnenrückwand aus einem sogenannten Organoblech, sein.

Zur form-, stoff- und/oder kraftschlüssigen Anordnung des Befestigungselements 1 in einem Faserverbundbauteil 14 wird ein erfindungsgemäß ausgeformtes Befestigungselement 1 auf eine vorgebbare Temperatur erhitzt und in erhitztem Zustand beginnend mit dem konus- oder kegelförmigen Abschnitt 4 durch das Faserverbundbauteil 14 gedrückt oder gepresst. Dabei liegt die vorgebbare Temperatur oberhalb einer Schmelztemperatur der thermoplastischen Matrix des Faserverbundbauteils 14, so dass diese thermoplastische Matrix im Verlauf des Durchdrückens des heißen Befestigungselements 1 aufgeschmolzen wird und beim Erkalten eine form-, stoff- und/oder kraftschlüssige Verbindung mit dem Befestigungselement 1, insbesondere mit dessen Oberflächenstrukturierung 12, ausbildet.

Dadurch ist zwischen Befestigungselement 1 und Faserverbundbauteil 14 eine besonders robuste und widerstandsfähige form-, stoff- und/oder kraftschlüssige Verbindung ausgebildet, mittels der große Kräfte in das Faserverbundbauteil 14 einleitbar sind.

Dabei wird das Befestigungselement 1 derart in das Faserverbundbauteil 14 gedrückt, dass die zweite Anlagefläche 11 des Halteabschnitts 9 des Befestigungselements 1 an einer ersten Seite 16 des Faserverbundbauteils 14 plan anliegt.

Eine Länge des hülsenartigen Abschnitts 2 ist korrespondierend zu einer Dicke des Faserverbundbauteils 14 ausgeformt, so dass der konus- oder kegelförmiger Abschnitt 4 des Befestigungselements 1 das Faserverbundbauteil 14 auf seiner zweiten Seite 17 überragt.

Im Verlauf des Durchdrückens des heißen Befestigungselements 1 durch das Faserverbundbauteil 14 werden die Fasern 15 des Faserverbundbauteils 14 durch den konus- oder kegelförmiger Abschnitt 4 des Befestigungselements 1 derart verdrängt, dass sie sich um den hülsenartigen Abschnitt 2 des Befestigungselements 1 legen und derart eine neue Faserorientierung, welche einen besonders vorteilhaften Kraftfluss ermöglicht, ausbilden, wie in Figur 3 schematisch dargestellt. Dabei erfolgt diese Verdrängung der Fasern 15 besonders vorteilhafterweise zerstörungsfrei.

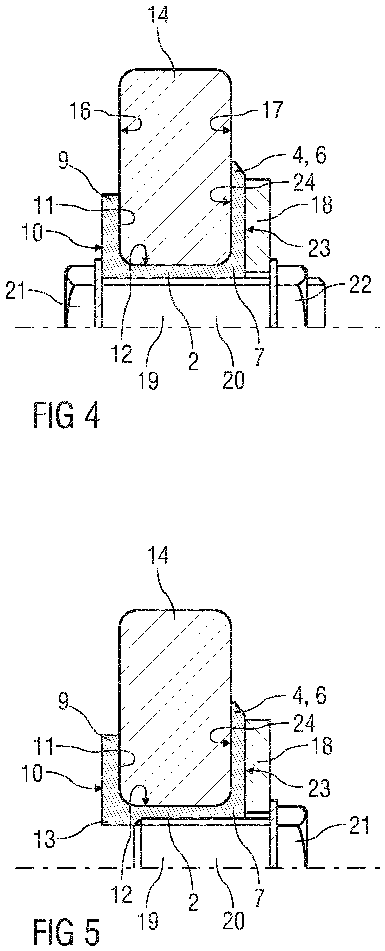

Figur 4 zeigt schematisch eine Schnittdarstellung einer mittels des erfindungsgemäßen Befestigungselements 1 hergestellten Verbindung zwischen dem Faserverbundbauteil 14 und einem Bauelement 18 in einer ersten Ausführungsvariante.

Nach der Anordnung des Befestigungselements 1 im Faserverbundbauteil 14 kann in einer ersten Ausführungsvariante eine herkömmliche Schraube 19 in den hülsenförmigen Abschnitt 2 eingeführt werden, wobei deren Schaft 20 einzelne Segmente 6 des konus- oder kegelförmigen Abschnitts 4 auseinanderdrückt. Dabei wird die Schraube 19 derart im Befestigungselement 1 angeordnet, dass ein Schraubenkopf 21 plan an der ersten Anlagefläche 10 des Halteabschnitts 9 anliegt und der Schaft 20 den konus- oder kegelförmigen Abschnitt 4 überragt.

Beim anschließenden Anordnen des zu befestigenden Bauelements 18 und einem Aufschrauben einer herkömmlichen Mutter 22 auf den Schaft 20 der Schraube 19 werden die einzelnen Segmente 6 des konus- oder kegelförmigen Abschnitts 4 derart verformt, bis sie rechtwinklig vom hülsenartigen Abschnitt 2 abgewinkelt sind und derart einen Außendurchmesser A des hülsenartigen Abschnitts 2 vergrößern und plane Anlageflächen 23, 24 der Segmente 6 ausbilden.

Dabei ist eine erste Anlagefläche 23 eines jeden Segments 6 vom hülsenartigen Abschnitt 2 abgewandt, während die zweite Anlagefläche 24 eines jeden Segments 6 in Richtung des hülsenartigen Abschnitts 2 weist.

Das zu befestigende Bauelement 18 wird mittels der Mutter 22 an die erste Anlagefläche 23 gepresst, wobei die zweite Anlagefläche 24 derart an das Faserverbundbauteil 14 gepresst wird.

Somit sind die abgewinkelten Elemente 6 zwischen Faserverbundbauteil 14 und zu befestigendem Bauelement 18 angeordnet und können derart im abgewinkelten Zustand vorteilhafterweise eine herkömmliche Unterlegscheibe substituieren.

Eine Abwinklung der einzelnen Segmente 6 des konus- oder kegelförmigen Abschnitts 4 kann dabei von einer Materialschwächung im Übergangsbereich 7 zwischen dem hülsenartigen Abschnitt 2 und dem konus- oder kegelförmigen Abschnitt 4 des Befestigungselements 1 unterstützt werden.

Figur 5 zeigt schematisch eine Schnittdarstellung einer mittels des erfindungsgemäßen Befestigungselements 1 hergestellten Verbindung zwischen dem Faserverbundbauteil 14 und einem Bauelement 18 in einer zweiten Ausführungsvariante.

In dieser zweiten Ausführungsvariante werden die einzelnen Segmente 6 des konus- oder kegelförmigen Abschnitts 4 des Befestigungselements 1 mittels eines nicht dargestellten Dorns abgewinkelt. Am oder im hülsenartigen Abschnitt 2 des Befestigungselements 1 ist ein Innengewinde 13 ausgebildet, in welches eine korrespondierend ausgeformte herkömmliche Schraube 19 eingeschraubt wird.

Der Schraubenkopf 21 presst dabei das zu befestigende Bauelement 18 plan an die erste Anlagefläche 23 der einzelnen Segmente 6 des konus- oder kegelförmigen Abschnitts 4, wobei die zweite Anlagefläche 24 der einzelnen Segmente 6 derart an das Faserverbundbauteil 14 gepresst wird.

Das zu befestigende Bauelement 18 kann dabei beispielsweise als Verstärkungsblech, Schlossgehäuse, Gurtumlenkung, Rücksitzlehnenlager oder ein sonstiges Funktionselement ausgebildet sein.

Mittels einer solchen Verbindung zwischen Befestigungselement 1 und Faserverbundbauteil 14 können hohe Kräfte übertragen werden, welche beispielsweise an Autositzen im Crashfall auftreten. Herkömmliche Verbindungselemente müssen entweder aufwändig im Herstellprozess des Faserverbundbauteils 14 in selbigem eingebettet werden oder schraubend unter Zerstörung der Fasern 15 des Faserverbundbauteils 14 durch einen Bohrungsprozess am Faserverbundbauteil 14 angeordnet werden. Das erfindungsgemäße Verfahren ermöglicht einen faserzerstörungsfreien form-, stoff- und/oder kraftschlüssigen Verbund zwischen Befestigungselement 1 und Faserverbundbauteil 14, wobei insbesondere eine Kraftleitung zwischen Befestigungselement 1 und Faserverbundbauteil 14 signifikant verbessert ist.

### Bezugszeichenliste

- 1: Befestigungselement
- 2: hülsenartiger Abschnitt
- 3: erstes Ende
- 4: konus- oder kegelförmiger Abschnitt
- 5: Schlitz
- 6: Segment
- 7: Übergangsbereich
- 8: zweites Ende
- 9: Halteabschnitt
- 10: erste Anlagefläche
- 11: zweite Anlagefläche
- 12: Oberflächenstrukturierung
- 13: Innengewinde
- 14: Faserverbundbauteil
- 15: Faser
- 16: erste Seite
- 17: zweite Seite
- 18: Bauelement
- 19: Schraube
- 20: Schaft
- 21: Schraubenkopf
- 22: Mutter
- 23: erste Anlagefläche
- 24: zweite Anlagefläche

- A: Außendurchmesser

## Patentansprüche

1. Befestigungselement (1) zur form-, stoff- und/oder kraftschlüssigen Anordnung an oder in einem Faserverbundbauteil (14) umfassend einen hülsenartigen Abschnitt (2), an dessen erstem Ende (3) ein spitz zulaufender hohler konus- oder kegelförmiger Abschnitt (4) ausgebildet ist, wobei in diesen hohlen konus- oder kegelförmigen Abschnitt (4) eine Mehrzahl von Schlitzen (5) eingebracht ist, welche in Richtung einer Längserstreckung des Befestigungselements (1) ausgerichtet sind und den hohlen konus- oder kegelförmigen Abschnitt (4) in einzelne Segmente (6) unterteilen, und wobei am zweiten Ende (8) des hülsenartigen Abschnitts (2) ein Halteabschnitt (9) angeordnet ist, welcher rechtwinklig vom hülsenartigen Abschnitt (2) abgewinkelt ist und einen Außendurchmesser (A) des hülsenartigen Abschnitts (2) vergrößert und plane Anlageflächen (10, 11) ausbildet, wobei in einem Übergangsbereich (7) zwischen dem hülsenartigen Abschnitt (2) und dem hohlen konus- oder kegelförmigen Abschnitt (4) eine Materialschwächung ausgebildet ist und die Mehrzahl von Schlitzen (5) sich von der Spitze des hohlen konus- oder kegelförmigen Abschnitts (4) bis zum Übergangsbereich (7) erstrecken.

2. Befestigungselement (1) nach Anspruch 1,
**dadurch gekennzeichnet, dass** die Materialschwächung als eine Perforation und/oder eine Querschnittsverringerung ausgebildet ist.

3. Befestigungselement (1) nach einem der vorherigen Ansprüche,
**dadurch gekennzeichnet, dass** am oder im hülsenartigen Abschnitt (2) ein Innengewinde (13) ausgebildet ist.

4. Befestigungselement (1) nach einem der vorherigen Ansprüche,
**dadurch gekennzeichnet, dass** im Bereich des hülsenartigen Abschnitts (2) außenseitig eine Oberflächenstrukturierung (12) ausgebildet ist.

5. Befestigungselement (1) nach Anspruch 4,
**dadurch gekennzeichnet, dass** die Oberflächenstrukturierung (12) als eine Narbung und/oder eine Riffelung ausgebildet ist.

6. Verfahren zur Montage eines Befestigungselements (1) nach einem der vorherigen Ansprüche,
**dadurch gekennzeichnet, dass** das Befestigungselement (1) auf eine vorgebbare Temperatur, welche oberhalb einer Schmelztemperatur der thermoplastischen Matrix des Faserverbundbauteils (14) liegt, erhitzt wird und in erhitztem Zustand derart durch ein Faserverbundbauteil (14) gedrückt oder gepresst wird, dass eine zweite Anlagefläche (11) eines Halteabschnitts (9) des Befestigungselements (1) an einer ersten Seite (16) des Faserverbundbauteils (14) plan anliegt und ein hohler konus- oder kegelförmiger Abschnitt (4) des Befestigungselements (1) das Faserverbundbauteil (14) auf seiner zweiten Seite (17) überragt.

7. Verfahren nach Anspruch 6,
**dadurch gekennzeichnet, dass** im Verlauf des Durchdrückens des heißen Befestigungselements (1) durch das Faserverbundbauteil (14) die Fasern (15) des Faserverbundbauteils (14) durch den hohlen konus- oder kegelförmiger Abschnitt (4) des Befestigungselements (1) derart zerstörungsfrei verdrängt werden, dass sie sich um den hülsenartigen Abschnitt (2) des Befestigungselements (1) legen und derart eine neue Faserorientierung ausgebildet wird.

8. Verfahren nach Anspruch 6 oder 7,
**dadurch gekennzeichnet, dass** eine Schraube (19) in den hülsenförmigen Abschnitt (2) eingeführt wird, deren Schaft (20) einzelne Segmente (6) des hohlen konus- oder kegelförmigen Abschnitts (4) auseinanderdrückt, welche beim anschließenden Anordnen des zu befestigenden Bauelements (18) und einem Aufschrauben einer Mutter (22) auf den Schaft (20) der Schraube (19) derart verformt werden bis sie rechtwinklig vom hülsenartigen Abschnitt (2) abgewinkelt sind und derart einen Außendurchmesser (A) des hülsenartigen Abschnitts (2) vergrößern und plane Anlageflächen (23, 24) ausbilden.

9. Verfahren nach Anspruch 6 oder 7,
**dadurch gekennzeichnet, dass** die einzelnen Segmente (6) des hohlen konus- oder kegelförmigen Abschnitts (4) mittels eines Dorns abgewinkelt werden, wobei am oder im hülsenartigen Abschnitt (2) des Befestigungselements (1) ein Innengewinde (13) ausgebildet ist, in welches eine herkömmliche Schraube (19) eingeschraubt wird, deren Schraubenkopf (21) das zu befestigende Bauelement (18) plan an eine von den einzelnen Segmenten (6) des hohlen konus- oder kegelförmigen Abschnitts (4) gebildete erste Anlagefläche (23) presst.

## Claims

1. A securing element (1) for positive-locking, materially engaging and/or non-positive-locking arrangement on or in a composite fiber component (14) comprising a sleeve-like portion (2), at the first end (3) of which an acutely tapering hollow conical or cone-like portion (4) is formed, wherein there are formed in this hollow conical or cone-like portion (4) a plurality of slots (5) which are orientated in the direction of a longitudinal extent of the securing element (1) and which subdivide the hollow conical or cone-like portion (4) into individual segments (6) and wherein there is arranged at the second end (8) of the sleeve-like portion (2) a retention portion (9) which is bent at right-angles away from the sleeve-like portion (2) and which increases an outer diameter (A) of the sleeve-like portion (2) and forms planar abutment faces (10, 11) wherein a material weakening is formed in a transition region (7) between the sleeve-like portion (2) and the hollow conical or cone-like portion (4) and a plurality of the slots (5) extend from the tip of the hollow conical or cone-like position to the transition region.

2. The securing element (1) as claimed in claim 1,
**characterized in that** the material weakening is constructed as a perforation and/or a cross-section reduction.

3. The securing element (1) as claimed in one of the preceding claims,
**characterized in that** an inner thread (13) is formed on or in the sleeve-like portion (2).

4. The securing element (1) as claimed in one of the preceding claims,
**characterized in that** a surface structure (12) is formed at the outer side in the region of the sleeve-like portion (2).

5. The securing element (1) as claimed in claim 4,
**characterized in that** the surface structure (12) is constructed as a grain and/or a corrugation.

6. A method for assembling a securing element (1) as claimed in one of the preceding claims,
**characterized in that** the securing element (1) is heated to a predeterminable temperature which is above a melting temperature of the thermoplastic matrix of the composite fiber component (14) and in the heated state is pushed or pressed through a composite fiber component (14) in such a manner that a second abutment face (11) of a retention portion (9) of the securing element (1) is in planar abutment with a first side (16) of the composite fiber component (14) and a hollow conical or cone-like portion (4) of the securing element (1) protrudes beyond the composite fiber component (14) at the second side (17) thereof.

7. The method as claimed in claim 6,
**characterized in that**, while the hot securing element (1) is pressed through the composite fiber component (14), the fibers (15) of the composite fiber component (14) are urged through the hollow conical or cone-like portion (4) of the securing element (1) so as not to be destroyed in such a manner that they are positioned around the sleeve-like portion (2) of the securing element (1) and a new fiber orientation is thereby formed.

8. The method as claimed in claim 6 or 7,
**characterized in that** there is introduced into the sleeve-like portion (2) a screw (19) whose shaft (20) presses apart individual segments (6) of the hollow conical or cone-like portion (4) which, when the structural element (18) to be secured is subsequently arranged and a nut (22) is screwed onto the shaft (20) of the screw (19), are deformed to such an extent that they are bent at right-angles away from the sleeve-like portion (2) and thereby increase an outer diameter (A) of the sleeve-like portion (2) and form planar abutment faces (23, 24).

9. The method as claimed in claim 6 or 7,
**characterized in that** the individual segments (6) of the hollow conical or cone-like portion (4) are bent by means of a mandrel, wherein there is formed on or in the sleeve-like portion (2) of the securing element (1) an inner thread (13) into which there is screwed a conventional screw (19) whose screw head (21) presses the structural element (18) to be secured in a planar manner against a first abutment face (23) formed by the individual segments (6) of the hollow conical or cone-like portion (4).

## Revendications

1. Elément de fixation (1) pour l'agencement par complémentarité de forme, de matière et/ou de force sur ou dans une pièce composite renforcée par des fibres (14), comprenant une partie en forme de douille (2), dont la première extrémité (3) présente une partie creuse en forme de cône ou conique (4) se terminant en pointe, dans lequel une multiplicité de fentes (5) sont pratiquées dans cette partie creuse en forme de cône ou conique (4), qui sont orientées dans la direction d'une extension longitudinale de l'élément de fixation (1) et qui subdivisent la partie creuse en forme de cône ou conique (4) en segments individuels (6), et dans lequel une partie de retenue (9) est disposée à la deuxième extrémité (8) de la partie en forme de douille (2), qui est coudée perpendiculairement à la partie en forme de douille (2) et agrandit le diamètre extérieur (A) de la partie en forme de douille (2) et forme des faces d'appui planes (10, 11), dans lequel un affaiblissement de la matière est formé dans une région de transition (7) entre la partie en forme de douille (2) et la partie creuse en forme de cône ou conique (4) et la multiplicité de fentes (5) s'étendent de la pointe de la partie creuse en forme de cône ou conique (4) jusqu'à la région de transition (7).

2. Elément de fixation (1) selon la revendication 1, **caractérisé en ce que** l'affaiblissement de matière est réalisé sous la forme d'une perforation et/ou d'une diminution de section transversale.

3. Elément de fixation (1) selon l'une quelconque des revendications précédentes, **caractérisé en ce qu'**un filet intérieur (13) est formé sur ou dans la partie en forme de douille (2).

4. Elément de fixation (1) selon l'une quelconque des revendications précédentes, **caractérisé en ce qu'**une structuration superficielle (12) est formée du côté extérieur dans la région de la partie en forme de douille (2).

5. Elément de fixation (1) selon la revendication 4, **caractérisé en ce que** la structuration superficielle (12) est réalisée sous forme de grain ou de cannelure.

6. Procédé de montage d'un élément de fixation (1) selon l'une quelconque des revendications précédentes, **caractérisé en ce que** l'on chauffe l'élément de fixation (1) à une température prévisible, qui se situe au-dessus de la température de fusion de la matrice thermoplastique de la pièce composite renforcée par des fibres (14), et on le pousse ou on le presse à l'état chauffé à travers une pièce composite renforcée par des fibres (14), de telle manière qu'une deuxième face d'appui (11) d'une partie de retenue (9) de l'élément de fixation (1) s'applique à plat sur un premier côté (16) de la pièce composite renforcée par des fibres (14) et qu'une partie creuse en forme de cône ou conique (4) de l'élément de fixation (1) dépasse la pièce composite renforcée par des fibres (14) sur son deuxième côté (17).

7. Procédé selon la revendication 6, **caractérisé en ce qu'**au cours de la poussée de l'élément de fixation chaud (1) à travers la pièce composite renforcée par des fibres (14), les fibres (15) de la pièce composite renforcée par des fibres (14) sont déplacées sans destruction par la partie creuse en forme de cône ou conique (4) de l'élément de fixation (1), de telle manière qu'elles se placent autour de la partie en forme de douille (2) de l'élément de fixation (1) et que l'on forme ainsi une nouvelle orientation des fibres.

8. Procédé selon la revendication 6 ou 7, **caractérisé en ce que** l'on introduit une vis (19) dans la partie en forme de douille (2), dont la tige (20) écarte des segments individuels (6) de la partie creuse en forme de cône ou conique (4), qui lors d'un agencement ultérieur de l'élément de construction à fixer (18) et d'un vissage d'un écrou (22) sur la tige (20) de la vis (19) sont déformés de telle manière qu'ils soient coudés jusqu'à être perpendiculaires à la partie en forme de douille (2) et de telle manière qu'ils agrandissent un diamètre extérieur (A) de la partie en forme de douille (2) et qu'ils forment des faces d'appui planes (23, 24).

9. Procédé selon la revendication 6 ou 7, **caractérisé en ce que** l'on coude les segments individuels (6) de la partie creuse en forme de cône ou conique (4) au moyen d'un mandrin, dans lequel un filet intérieur (13) est formé sur ou dans la partie en forme de douille (2) de l'élément de fixation (1), dans lequel est vissée une vis traditionnelle (19), dont la tête de vis (21) presse l'élément de construction à fixer (18) à plat sur une première face d'appui (23) formée par les segments individuels (6) de la partie creuse en forme de cône ou conique (4).
